# EUROPEAN PATENT APPLICATION

(11) **EP 4 707 008 A1**
(43) Date of publication of application: **11.03.2026**
(21) Application number: 25196777.4
(22) Date of filing: 19.08.2025
(51) Int. Cl.: B60K 1/00, B60K 1/04, B60K 5/02, B60K 13/04, B60K 15/03, B60K 17/22

(54) **PLUG-IN HYBRID ELECTRIC VEHICLE**

(30) Priority: 29.08.2024 JP 2024147275
(71) Applicant: TOYOTA JIDOSHA KABUSHIKI KAISHA, Toyota-shi, Aichi-ken 471-8571 (JP)
(72) Inventor: KUSAKA, Hiroto, Aichi-ken, 471-8571 (JP)
(74) Representative: D Young & Co LLP

(57) **Abstract**

A pickup truck-type plug-in hybrid electric vehicle includes, from the front, an engine compartment section including an engine compartment in which an engine is arranged longitudinally, a cabin section provided with a passenger compartment, and a cargo section that includes a truck bed that opens upward. Left and right side members of a frame, a propeller shaft, and an exhaust pipe extend in a vehicle longitudinal direction through a region in the cabin section that is below the passenger compartment. The battery is disposed in a region of at least one of the cabin section and the cargo section, and the region is above the side members, the propeller shaft, and the exhaust pipe. The high-voltage electrical unit is disposed in a region in the cabin section that is below a rear-row seat and beneath a floor of the passenger compartment.

## Description

### BACKGROUND

### 1. Field

The present disclosure relates to a pickup truck-type plug-in hybrid electric vehicle.

### 2. Description of Related Art

International Publication No. 2008/082012 discloses a plug-in hybrid electric vehicle (hereinafter referred to as PHEV) having a unibody vehicle body structure.

A PHEV includes two drive sources (an engine and a motor), as well as a high-capacity battery. A PHEV further includes high-voltage electrical units electrically connected to the battery. Examples of such high-voltage electrical units include a power control unit for the motor and a vehicle on-board charging unit. In the PHEV described in the above publication, the battery is installed beneath the rear seat.

One known vehicle type is a pickup truck. A pickup truck includes a truck bed, which is rearward of the cabin and opens upward. Many pickup trucks include a body having a frame structure. A variety of components, including a transmission, a propeller shaft, an exhaust pipe, and a fuel tank, are disposed beneath the floor of a pickup truck. Therefore, when converting a pickup truck into a PHEV, it may be necessary to raise the floor height in order to provide space beneath the floor for accommodating a battery and a high-voltage electrical unit. However, users expect a pickup truck-type vehicle to include a cabin and a truck bed capable of carrying large-volume loads. Raising the floor to accommodate the battery and a high-voltage electrical unit reduces the available volume of the cabin and the truck bed, making it difficult to meet user demands.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a plug-in hybrid electric vehicle is a pickup truck-type plug-in hybrid electric vehicle including a fuel tank, an engine, a battery, a motor, a transmission, a propeller shaft connected to the engine via the motor and the transmission and configured to transmit rotational driving force of the engine and the motor to a rear wheel, an exhaust pipe configured to guide exhaust gas of the engine rearward in the vehicle, a high-voltage electrical unit electrically connected to the battery, a cabin section provided with a passenger compartment, an engine compartment section forward of the cabin section, a cargo section rearward of the cabin section, and a frame including left and right side members that extend in a vehicle longitudinal direction through a region in the cabin section that is below the passenger compartment. The propeller shaft and the exhaust pipe extend in the vehicle longitudinal direction through the region in the cabin section that is below the passenger compartment. The battery is disposed in a region of at least one of the cabin section and the cargo section, the region being above the side members, the propeller shaft, and the exhaust pipe. A front-row seat and a rear-row seat, that is disposed rearward of the front-row seat, are installed in the passenger compartment. The high-voltage electrical unit is disposed in a region in the cabin section that is below the rear-row seat and beneath a floor of the passenger compartment.

Other features and aspects will be apparent from the following detailed description, the drawings, and the claims.

### BRIEF DESCRIPTION OF THE DRAWINGS

Fig. 1 is a side view schematically showing the arrangement of components of a plug-in hybrid electric vehicle according to an embodiment.
Fig. 2 is a top view schematically showing the arrangement of seats in the plug-in hybrid electric vehicle shown in Fig. 1.
Fig. 3 is a top view schematically showing the arrangement of a drivetrain, a frame, an exhaust pipe, a fuel tank, and other components of the plug-in hybrid electric vehicle shown in Fig. 1.
Fig. 4 is a top view schematically showing the arrangement of a battery and a high-voltage electrical unit of the plug-in hybrid electric vehicle shown in Fig. 1.
Fig. 5 is a cross-sectional view taken along line 5-5 in Figs. 1 to 4, showing the structure of the high-voltage electrical unit and its surroundings.
Fig. 6 is a diagram showing a behavior of the high-voltage electrical unit shown in Fig. 5 during a side collision.
Fig. 7 is a cross-sectional view showing a high-voltage electrical unit and its surroundings in a plug-in hybrid electric vehicle according to another embodiment.
Fig. 8 is a diagram showing a battery arrangement in a plug-in hybrid electric vehicle according to a modification.
Fig. 9 is a diagram showing a battery arrangement in a plug-in hybrid electric vehicle according to another modification.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

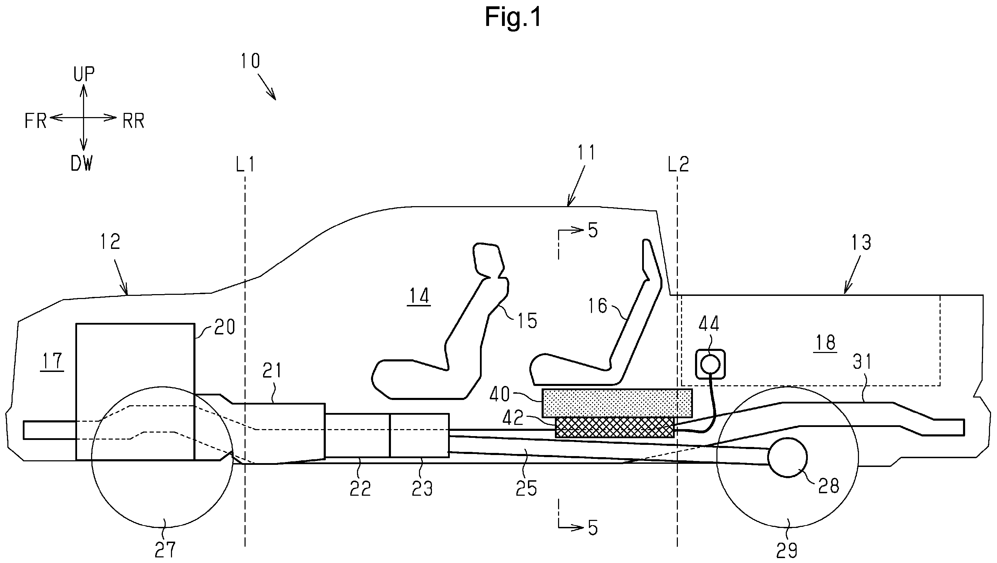

A plug-in hybrid electric vehicle 10 according to one embodiment will now be described with reference to Figs. 1 to 6. In the following description, a "plug-in hybrid electric vehicle" is referred to as a "PHEV." Arrows shown in the drawings indicate direction in relation to a PHEV 10. Specifically, FR indicates the forward direction, RR indicates the rearward direction, UP indicates the upward direction, DW indicates the downward direction, LF indicates the leftward direction, and RF indicates the rightward direction.

As shown in Fig. 1, the PHEV 10 includes three sections, i.e., a cabin section 11, an engine compartment section 12 forward of the cabin section 11, and a cargo section 13 rearward of the cabin section 11. The cabin section 11 is provided with a passenger compartment 14, which accommodates occupants. The engine compartment section 12 includes an engine compartment 17 in which the engine 20 is arranged longitudinally. The PHEV 10 of the present embodiment is equipped with an engine 20 having a V-type cylinder arrangement. The cargo section 13 includes a truck bed 18 that opens upward. In Figs. 1 to 4, the cabin section 11 is a region in the PHEV 10 that is rearward of dotted line L1 and forward of dotted line L2. The engine compartment section 12 is a region in the PHEV 10 that is forward of dotted line L1. The cargo section 13 is a region in the PHEV 10 that is rearward of dotted line L2.

The PHEV 10 is provided with a charging inlet 44 for receiving a charging plug of a charging facility outside the PHEV 10. In Fig. 1, the charging inlet 44 is provided on a side surface of the cargo section 13.

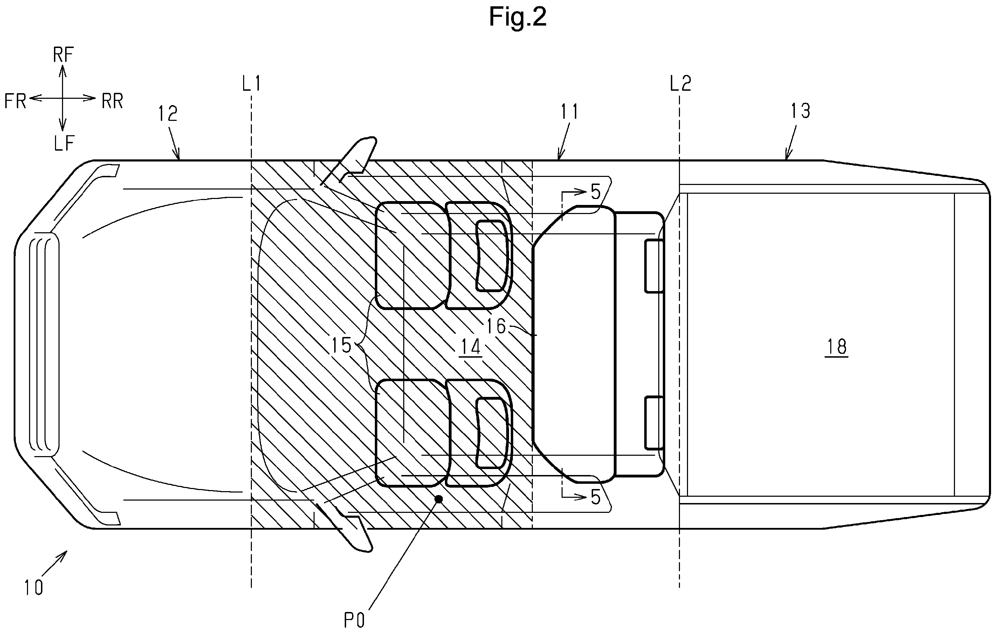

Fig. 2 shows the seat arrangement of the PHEV 10. Front-row seats 15 and a rear-row seat 16, which is positioned rearward of the front-row seats 15, are installed in the passenger compartment 14 of the PHEV 10. A hatched region P0 shown in Fig. 2 indicates a region in the passenger compartment 14 located forward of the rear-row seat 16. The region P0 in the passenger compartment 14 corresponds to a region of the floor where occupant's feet or the like are expected to be placed.

### Configuration of Drivetrain of the PHEV

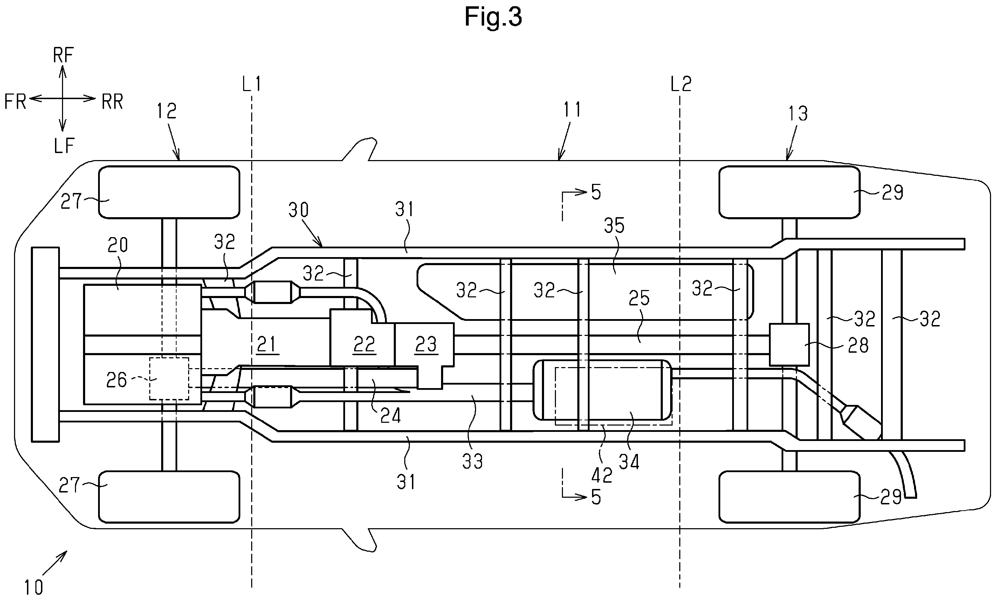

Next, the configuration of the drivetrain of the PHEV 10 will be described with reference to Fig. 3. The drivetrain of the PHEV 10 includes the engine 20, a transmission 21, a motor 22, and a transfer case 23. The drivetrain of the PHEV 10 includes propeller shafts 24 and 25 for the front and rear wheels. The propeller shafts 24 and 25 are each connected to the engine 20 via the transfer case 23, the motor 22, and the transmission 21. The propeller shaft 24 for the front wheels is connected to right and left front wheels 27 via a differential 26. The propeller shaft 25 for the rear wheels is connected to right and left rear wheels 29 via a differential 28.

### Configuration of Underfloor Structure of the PHEV

The configuration of the underfloor structure of the PHEV 10 will now be described with reference to Fig. 3. The space under the floor of the PHEV 10 refers to a region below floor panels of the passenger compartment 14 and the truck bed 18.

A frame 30 is provided under the floor of the passenger compartment 14 and the truck bed 18 of the PHEV 10. The frame 30 of the PHEV 10 of the present embodiment is a ladder-type frame having left and right side members 31 and multiple cross members 32 each connecting the side members 31 to each other. The left and right side members 31 are each disposed so as to extend in the vehicle longitudinal direction through a region in the cabin section 11 that is below the passenger compartment 14. As shown in Fig. 3, the propeller shaft 25 for the rear wheels extends in the vehicle longitudinal direction through the region in the cabin section 11 that is below the passenger compartment 14.

Further, an exhaust pipe 33 that guides exhaust gas of the engine 20 rearward is disposed under the floor of the PHEV 10. The exhaust pipe 33 extends in the vehicle longitudinal direction through the region in the cabin section 11 that is below the passenger compartment 14. A muffler 34 is installed at an intermediate portion of the exhaust pipe 33. The muffler 34 is disposed in the region in the cabin section 11 that is below the passenger compartment 14. A fuel tank 35 for storing fuel for the engine 20 is installed under the floor of the PHEV 10. The propeller shaft 25 for the rear wheels is disposed in a region between the exhaust pipe 33 and the fuel tank 35 in the vehicle width direction.

### Arrangement of Battery and High-Voltage Electrical Unit

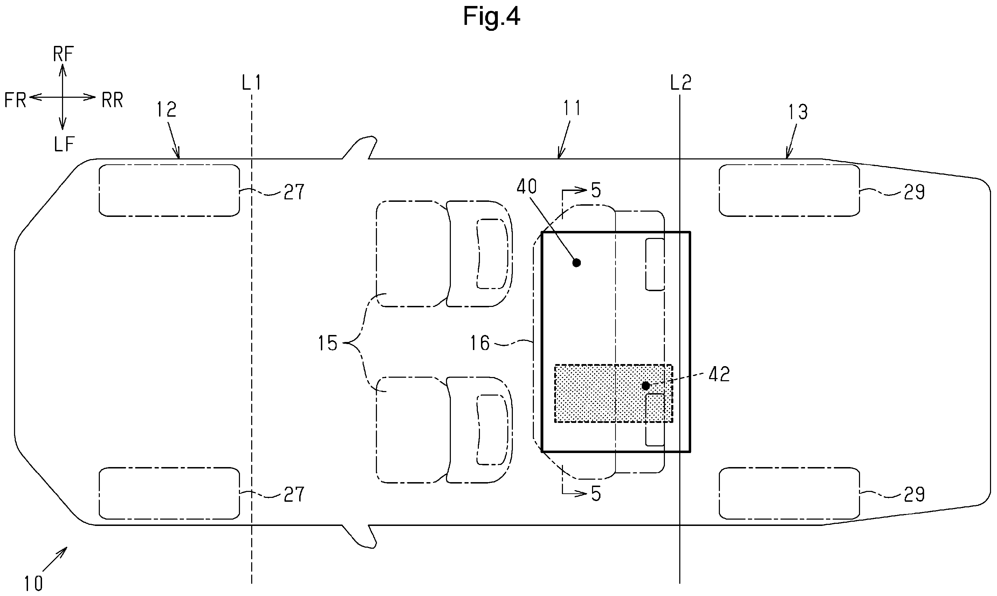

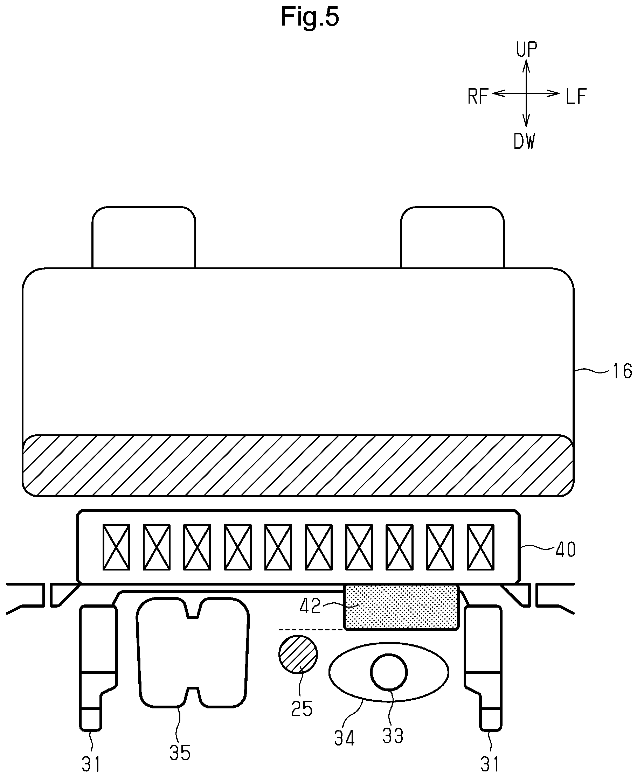

Next, the arrangement of a battery 40 and a high-voltage electrical unit 42 of the PHEV 10 will be described with reference to Figs. 4 and 5. Fig. 4 shows the arrangement of the battery 40 and the high-voltage electrical unit 42 in the PHEV 10 as viewed from above. Fig. 5 shows a schematic cross-sectional structure of the PHEV 10 taken along line 5-5 in Figs. 1 to 4.

The PHEV 10 includes the battery 40, which stores electric power. The battery 40 includes multiple cells housed within a case. The battery 40 is installed in a region in the cabin section 11 that is below the rear-row seat 16 and above the propeller shaft 25 for the rear wheels, the exhaust pipe 33, the fuel tank 35, and the side members 31. In the present embodiment, the battery 40 is installed on the floor of the passenger compartment 14.

The PHEV 10 includes the high-voltage electrical unit 42, which is electrically connected to the battery 40. The high-voltage electrical unit 42 includes an electric circuit for electric power conversion and a case that houses the electric circuit. In the present embodiment, the high-voltage electrical unit 42 is a vehicle on-board charging unit that converts electric power received from the outside through the charging inlet 44 and charges the battery 40 with the converted electric power. The high-voltage electrical unit 42 is disposed in a region in the cabin section 11 that is below the rear-row seat 16 and under the floor of the passenger compartment 14. In the PHEV 10 of the present embodiment, the high-voltage electrical unit 42 is disposed below the battery 40 with the floor panel of the passenger compartment 14 interposed therebetween.

As shown in Fig. 5, the high-voltage electrical unit 42 is disposed between the left and right side members 31 and above the propeller shaft 25 for the rear wheels. Specifically, the high-voltage electrical unit 42 is located between the left side member 31 and the propeller shaft 25 for the rear wheels in the vehicle width direction. The bottom surface of the high-voltage electrical unit 42 is located above the propeller shaft 25 for the rear wheels.

### Operation and Advantages of the Embodiment

Operation and advantages of the present embodiment will now be described.

In addition to the frame 30, components such as the propeller shaft 25, the exhaust pipe 33, and the fuel tank 35 are installed under the floor of a PHEV. Accordingly, in a typical pickup truck-type PHEV, it is difficult to provide sufficient space beneath the floor for installing the battery 40 and the high-voltage electrical unit 42. In contrast, in the PHEV 10 of the present embodiment, the battery 40 is disposed in the region in the cabin section 11 that is above the propeller shaft 25, the exhaust pipe 33, the fuel tank 35, and the side members 31 of the frame 30. Specifically, the battery 40 is disposed below the rear-row seat 16 and on the floor of the passenger compartment 14. The high-voltage electrical unit 42 is disposed in a region in the cabin section 11 that is below the rear-row seat 16 and under the floor of the passenger compartment 14. By arranging the battery 40 and the high-voltage electrical unit 42 separately above and below the floor of the passenger compartment 14, the PHEV 10 of the present embodiment is able to provide installation space for both the battery 40 and the high-voltage electrical unit 42.

In the PHEV 10 of the present embodiment, the high-voltage electrical unit 42 is disposed between the left and right side members 31 and above the propeller shaft 25 for the rear wheels. This arrangement of the high-voltage electrical unit 42 provides the following advantages.

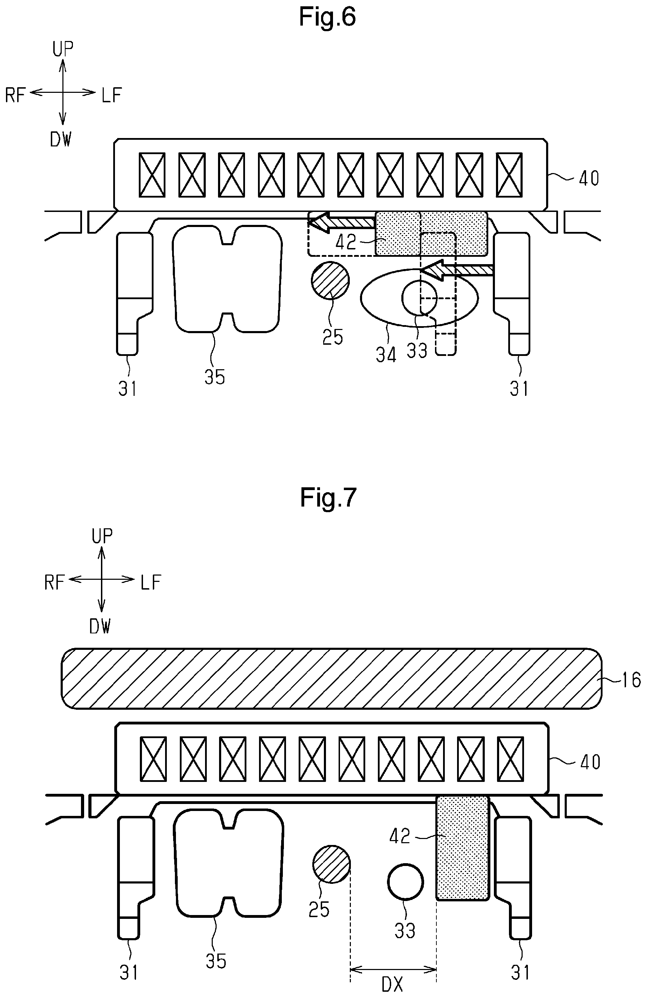

Fig. 6 illustrates the behavior of the high-voltage electrical unit 42 during a side collision, in which an object impacts the PHEV 10 from the left side. When a side impact causes the left side member 31 to move toward the right, the high-voltage electrical unit 42 is also pushed to the right. If the bottom surface of the high-voltage electrical unit 42 is located below the propeller shaft 25, the high-voltage electrical unit 42 may be caught between the rigid side member 31 and the propeller shaft 25. In contrast, in the PHEV 10 of the present embodiment, the high-voltage electrical unit 42 is located above the propeller shaft 25 for the rear wheels. As a result, even when being displaced together with the side member 31 during a side impact, the high-voltage electrical unit 42 is prevented from being caught between the side member 31 and the propeller shaft 25.

The PHEV 10 of the present embodiment described above has the following advantages.
(1) In the PHEV 10 of the present embodiment, the battery 40 and the high-voltage electrical unit 42 are disposed separately. Specifically, the battery 40 is disposed above the floor of the passenger compartment 14, and the high-voltage electrical unit 42 is disposed under the floor of the passenger compartment 14. As a result, even in a PHEV 10 in which many components are installed under the floor, installation space for both the battery 40 and the high-voltage electrical unit 42 can be readily provided.
(2) The high-voltage electrical unit 42 is disposed between the left and right side members 31 and above the propeller shaft 25 for the rear wheels. Therefore, the high-voltage electrical unit 42 is less likely to be caught between the propeller shaft 25 and the side member 31 during a side collision.
(3) The battery 40 and the high-voltage electrical unit 42 are arranged vertically with the floor panel of the passenger compartment 14 interposed therebetween. This facilitates routing of a cable or the like that electrically connects the battery 40 and the high-voltage electrical unit 42 to each other.
(4) The high-voltage electrical unit 42 in the PHEV 10 of the present embodiment is a vehicle on-board charging unit. The charging inlet 44 is provided on a side surface of the cargo section 13. Accordingly, the distance between the charging inlet 44 and the high-voltage electrical unit 42 is relatively short. This facilitates the routing of a cable or the like that connects the charging inlet 44 and the high-voltage electrical unit 42 to each other.
(5) Occupant's feet or the like are expected to be placed on the floor surface of the region P0 in the passenger compartment 14, which is forward of the rear-row seat 16. If the battery 40 is installed on the floor of the region P0 of the passenger compartment 14, the occupant comfort may be impaired. In contrast, in the PHEV 10 of the present embodiment, the battery 40 is disposed on the floor of a region in the passenger compartment 14 other than the region P0, which is forward of the rear-row seat 16. In other words, the battery 40 is arranged such that it does not extend forward beyond the rear-row seat 16. This configuration reduces deterioration of occupant comfort due to installation of the battery 40 on the floor.

### Other Embodiments

The above-described embodiment may be modified as follows. The above-described embodiment and the following modifications can be combined as long as the combined modifications remain technically consistent with each other.

### The High-Voltage Electrical Unit 42

For example, as shown in Fig. 7, the high-voltage electrical unit 42 may be installed in a state in which the bottom surface thereof is positioned below the propeller shaft 25 for the rear wheels. Even in this case, if a sufficient clearance DX is provided between the propeller shaft 25 and the high-voltage electrical unit 42 in the vehicle width direction, the likelihood of the high-voltage electrical unit 42 being caught between the propeller shaft 25 and the side member 31 during a side impact is reduced.

The high-voltage electrical unit 42 may be a unit other than the vehicle on-board charging unit as long as the unit is electrically connected to the battery 40 and performs power conversion. Examples of the high-voltage electrical unit 42 other than the vehicle on-board charging unit include a power control unit that performs power control of the motor 22. The high-voltage electrical unit 42 may be a step-down unit that converts high-voltage electric power output from the battery 40 into low-voltage DC power to be supplied to auxiliary devices or the like. The high-voltage electrical unit 42 may also be implemented as a unit that integrates two or more functions, such as a vehicle on-board charging unit, a power control unit, and a step-down unit.

### Arrangement of the Battery 40

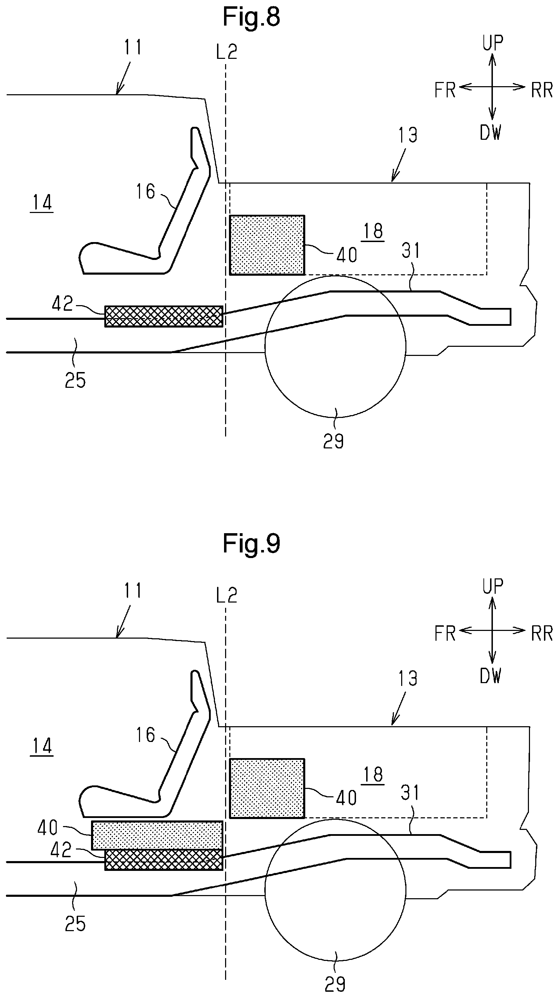

As shown in Fig. 8, the battery 40 may be disposed in a region in the cargo section 13 that is above the side members 31, the propeller shaft 25, and the exhaust pipe 33. In Fig. 8, the battery 40 is disposed in the truck bed 18. The battery 40 is installed on the bottom surface of the truck bed 18.

As shown in Fig. 9, the battery 40 may be divided such that one portion of the battery 40 is installed in a region in the cabin section 11 that is below the rear-row seat 16 and above the side members 31, the propeller shaft 25, and the exhaust pipe 33, and the other portion of the battery 40 is installed in a region in the cargo section 13 that is above the side members 31, the propeller shaft 25, and the exhaust pipe 33.

The battery 40 may be disposed in a region other than the regions described above as long as that region is above the side members 31, the propeller shaft 25, and the exhaust pipe 33.

### Other Modifications

The PHEV 10 may also be equipped with an engine 20 having a cylinder arrangement other than the V type.

The arrangement of components such as the propeller shaft 25, the exhaust pipe 33, the muffler 34, and the fuel tank 35 under the floor of the PHEV 10 may be changed. For example, the propeller shaft 25 may be disposed in a region other than the space between the exhaust pipe 33 and the fuel tank 35 in the vehicle width direction.

The charging inlet 44 may be provided at a position different from that in the above-described embodiment.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A pickup truck-type plug-in hybrid electric vehicle (10), comprising:
a fuel tank (35);
an engine (20);
a battery (40);
a motor (22);
a transmission (21);
a propeller shaft (25) connected to the engine (20) via the motor (22) and the transmission (21) and configured to transmit rotational driving force of the engine (20) and the motor (22) to a rear wheel (29);
an exhaust pipe (33) configured to guide exhaust gas of the engine (20) rearward in the vehicle (10);
a high-voltage electrical unit (42) electrically connected to the battery (40);
a cabin section (11) provided with a passenger compartment (14);
an engine compartment section (12) forward of the cabin section (11);
a cargo section (13) rearward of the cabin section (11); and
a frame (30) including left and right side members (31) that extend in a vehicle longitudinal direction through a region in the cabin section (11) that is below the passenger compartment (14), wherein
the engine compartment section (12) includes an engine compartment (17) in which the engine (20) is arranged longitudinally,
the cargo section (13) includes a truck bed (18) that opens upward,
the propeller shaft (25) and the exhaust pipe (33) extend in the vehicle longitudinal direction through the region in the cabin section (11) that is below the passenger compartment (14),
the battery (40) is disposed in a region of at least one of the cabin section (11) and the cargo section (13), the region being above the side members (31), the propeller shaft (25), and the exhaust pipe (33),
a front-row seat (15) and a rear-row seat (16), that is disposed rearward of the front-row seat (15), are installed in the passenger compartment (14), and
the high-voltage electrical unit (42) is disposed in a region in the cabin section (11) that is below the rear-row seat (16) and beneath a floor of the passenger compartment (14).

2. The plug-in hybrid electric vehicle (10) according to claim 1, wherein the battery (40) is disposed in a region other than a region forward of the rear-row seat (16).

3. The plug-in hybrid electric vehicle (10) according to claim 1, wherein the battery (40) is disposed in a region in the cabin section (11) that is below the rear-row seat (16) and above the high-voltage electrical unit (42).

4. The plug-in hybrid electric vehicle (10) according to claim 1, wherein the battery (40) is disposed in the cargo section (13).

5. The plug-in hybrid electric vehicle (10) according to claim 1, wherein the battery (40) is divided such that one portion of the battery (40) is disposed in a region in the cabin section (11) that is below the rear-row seat (16), and another portion of the battery (40) is disposed in the cargo section (13).

6. The plug-in hybrid electric vehicle (10) according to any one of claims 1 to 5, wherein the high-voltage electrical unit (42) is disposed in a region that is between the left and right side members (31) and above the propeller shaft (25).

7. The plug-in hybrid electric vehicle (10) according to any one of claims 1 to 6, wherein the fuel tank (35) is disposed below the battery (40).

8. The plug-in hybrid electric vehicle (10) according to any one of claims 1 to 7, wherein the high-voltage electrical unit (42) is a power control unit configured to perform power control of the motor (22).

9. The plug-in hybrid electric vehicle (10) according to any one of claims 1 to 8, wherein the high-voltage electrical unit (42) is a vehicle on-board charging unit configured to charge the battery (40) with electric power supplied from outside the vehicle (10).

10. The plug-in hybrid electric vehicle (10) according to any one of claims 1 to 9, wherein the propeller shaft (25) is disposed in a region between the exhaust pipe (33) and the fuel tank (35) in a vehicle width direction.

11. The plug-in hybrid electric vehicle (10) according to any one of claims 1 to 10, wherein the engine (20) has a V-type cylinder arrangement.
